# EUROPÄISCHE PATENTSCHRIFT

(11) **EP 0 770 946 B1**
(45) Veröffentlichungstag und Bekanntmachung des Hinweises auf die Patenterteilung: **24.02.1999**
(21) Anmeldenummer: 96116748.3
(22) Anmeldetag: 18.10.1996
(51) Int. Cl.: G05B 23/02

(54) **Verfahren zur automatisierten optimalen Redundanz-Auslegung von Messungen für die Leittechnik in Kraftwerken**
Method for the automated design of optimal redundancy for measurements in the control system for power stations
Procédé pour concevoir automatiquement la redondance optimale pour des mesures dans le système de controle des centrales électriques

(30) Priorität: 24.10.1995 DE 19539477
(43) Veröffentlichungstag der Anmeldung: 02.05.1997
(73) Patentinhaber: ABB PATENT GmbH, 68309 Mannheim (DE)
(72) Erfinder: Erni, Karin, 69123 Heidelberg (DE); Schachinger, Rudolf, 68309 Mannheim (DE); Schmiega, Manfred, 67295 Bolanden (DE)
(74) Vertreter: Rupprecht, Klaus, Dipl.-Ing.

(56) Entgegenhaltungen:
- EP-A- 0 570 887

## Beschreibung

Die Erfindung bezieht sich auf ein Verfahren zur Redundanz-Auslegung von Messungen für die Leittechnik in Kraftwerken, bei der mit einer minimalen Anzahl von Meßstellen eine maximale Verfügbarkeit der Anlage sichergestellt wird.

Die Redundanz-Auslegung von Messungen ist als Teil eines Planungssystems aufzufassen, wobei für einen konkreten Prozeß oder Teilprozeß, z.B. das Speisewassersystem einer Kraftwerksanlage,
a) ein verfahrenstechnisches Schema zu erstellen ist,
b) leittechnische Strukturen zu generieren sind,
c) Regelkreise zu generieren sind und
d) eine meßtechnische Auslegung vorzunehmen ist.

Die Messung ist ein wichtiger Teil der automatisierten verfahrenstechnischen Anlagen, z.B. Kraftwerke. Sie dient als Informationsquelle zur Erfassung der Anlagenzustände von denen automatische Aktionen der Leittechnik abgeleitet werden oder vom Bedienpersonal darauf basierend Handeingriffe vorgenommen werden. Weiter werden diese Daten zur stetigen Beobachtung und gegebenenfalls Protokollierung genutzt. Die ständig steigenden Anforderungen an die Automatisierung können häufig nur durch erhöhten Meßaufwand erfüllt werden.

Das Verfahren zur Redundanz-Auslegung von Messungen setzt auf einer gegebenen Aufgabenstellung pro Messung auf, die für jede Messung ein Datenblatt mit der meßtechnischen Aufgabe, z.B. "Druck hinter Pumpe", und eine Liste der leittechnischen Aufgaben beinhaltet.. Die leittechnischen Aufgaben geben vor, bei welchem Zustand der Meßgröße eine oder mehrere leittechnischen Aufgaben zu erfüllen sind, z.B. bei Zustand ">MAX" eine Schutzauslösung und Prozeßstörmeldung.

Eine Messung ist eine ,,meßtechnische Aufgabe", z.B. Druckmessung hinter einer Pumpe. Die Meßstellen für diese Messung sind die meßtechnische Realisierung der Aufgabe. Das bedeutet, daß entsprechend der Meßaufgabe die Meßstellen ausgelegt werden müssen. Die Auslegung muß die physikalischen und variablen projektspezifischen Regeln berücksichtigen. Zum Beispiel können Temperaturen oder Mengen für Regelungsaufgaben nur analog gemessen werden. Die Anzahl der Meßstellen ist von dem projektspezifischen Verfügbarkeitskonzept abhängig, in dem die zulässige Belegung einer Meßstelle mit unterschiedlichen leittechnischen Aufgaben und die Mindestanzahl der Meßstellen (Redundanz) für wichtige Aufgaben, wie Schutz oder Regelung, vorgegeben wird. Für die optimale Auslegung der Messung gilt, diese Anforderungen für jede Messung zu bewerten und möglichst wenige Meßstellen zu belegen.

Bisher wird die Redundanz-Auslegung der Messungen von Planern oder Planungsteams durch aufwendige Erfassung und Umsetzung der Anforderungen des, in verfahrenstechnischen Unterlagen beschriebenen technischen Prozesses, unter .Beachtung von Planungsrichtlinien, z.B. VGB (Vereinigung der Großkraftwerksbetreiber) erstellt. Diese Vorgehensweise erfordert in jedem Projekt einen intensiven und zeitaufwendigen Einsatz von hochqualifizierten Planungsingenieuren; die Qualität der Ergebnisse ist vom jeweiligen Planer abhängig und läßt sich nur stichprobenweise prüfen.

Es entsteht somit Bedarf an einem variablen und rationellen Verfahren zur Redundanz-Auslegung von Messungen, das zugleich zu qualitativ besseren und besser prüfbaren Ergebnissen führt.

Der Erfindung liegt die Aufgabe zugrunde, ein Verfahren anzugeben, das eine automatisierte Redundanz-Auslegung von Messungen ermöglicht.

Diese Aufgabe wird gelöst durch ein Verfahren mit den in Anspruch 1 angegebenen Merkmalen zur Redundanz-Auslegung von Messungen. Vorteilhafte Ausgestaltungen sind in weiteren Ansprüchen angegeben und den weiter unten beschriebenen Ausführungsbeispielen zu entnehmen.

Die erfindungsgemäße Redundanz-Auslegung von Messungen hat eine Reihe von Vorteilen: Die Produktivität wird erhöht, die Planungszeit verkürzt, die Qualität und die Prüfbarkeit verbessert. Die nach dem Verfahren erstellte Auslegung der Messungen ist anwendbar im Rahmen eines umfangreichen Planungssystems für Kraftwerksleitsysteme. Das Verfahren generiert reproduzierbare Ergebnisse, d.h. für das gleiche verfahrenstechnische Schema ergibt sich in jedem Fall die gleiche Auslegung. Die Ergebnisdaten sind vom konkreten Prozeßleitsystem unabhängig und können anschließend zu einem konkreten Prozeßleitsystem transferiert und in produkt- und herstellerspezifische Lösungen automatisch umgesetzt werden.

Das Verfahren arbeitet mit einem Expertensystem. Ein Expertensystem kann nicht nur wie herkömmliche Programme Daten nach einer vorgefertigten Befehlsfolge verändern, sondern auch einen Satz von vorgegebenen Regeln selbständig auf einen Datenbestand anwenden. Das Expertensystem wählt die gültigen Regeln aus und wendet sie an, bis es ein Ergebnis erreicht, das alle geltenden Regeln erfüllt. Dabei wird eine feste Vorgehensweise und ein festes Regelwerk verfolgt, so daß die Ergebnisse immer reproduzierbar und nachvollziehbar begründet sind.

Das Verfahren produziert eine Liste der minimal nötigen Meßstellen für eine Messung, so daß die Messung dennoch maximale Verfügbarkeit gemäß der an sie gestellten Aufgaben liefern kann. Minimal bedeutet minimal in der Anzahl der Meßstellen und bezüglich der Kosten (Binärmessungen sind in der Regel billiger als analoge Messungen).

Insbesondere sind nach der Auslegung folgende Bedingungen erfüllt:
- die Anzahl der binären Meßstellen überschreitet nicht die diesbezügliche Obergrenze;
- keine Meßstelle vereinigt zwei gleiche Aufgaben mit derselben Herkunft und selbem Signal auf sich (d.h. aus derselben Redundanzschaltung), es sei denn, die Priorität der Aufgaben ist niedrig;
- keine Meßstelle vereinigt Aufgaben mit nicht erwünschten Aufgabenkombinationen auf sich, es sei denn, mindestens eine der Aufgaben hat niedrige Priorität und es gibt keine andere Meßstelle zu der Messung, die eine der Aufgaben bekommen kann, ohne daß eine unerwünschte Aufgabenkombination entsteht;
- jede binäre Meßstelle hat nur binäre Aufgaben, analoge Meßstellen binäre und/oder analoge Aufgaben;
- keine binäre Meßstelle hat zwei Aufgaben mit unterschiedlichen Signalen (bei Endlagenmessungen bedeuten "AUF" und "N AUF" das gleiche Signal).

Die Meßstellen werden außerdem mit Kennbuchstaben versehen, aus denen ersichtlich ist, welche Aufgaben die Meßstelle übernimmt (z.B. 'SC' für eine Meßstelle, die für Steuerung und Regelung (Control) verwendet wird). Beispiele für Kennbuchstaben finden sich in der Norm DIN 19227, Teil 3, September 1978.

Das Verfahren zur automatischen optimalen Redundanz-Auslegung von Messungen wird nachstehend anhand von in Zeichnungsfiguren dargestellten Abläufen und Ausführungsbeispielen weiter erläutert.
Es zeigen:
- Fig. 1: ein Übersichtsbild zur automatischen Redundanzauslegung von Messungen
- Fig. 2: Verfahrensschritte und Vorgaben zur Redundanzauslegung von Messungen
- Fig. 3: Beispiel einer Bearbeitung nach Fig. 2.

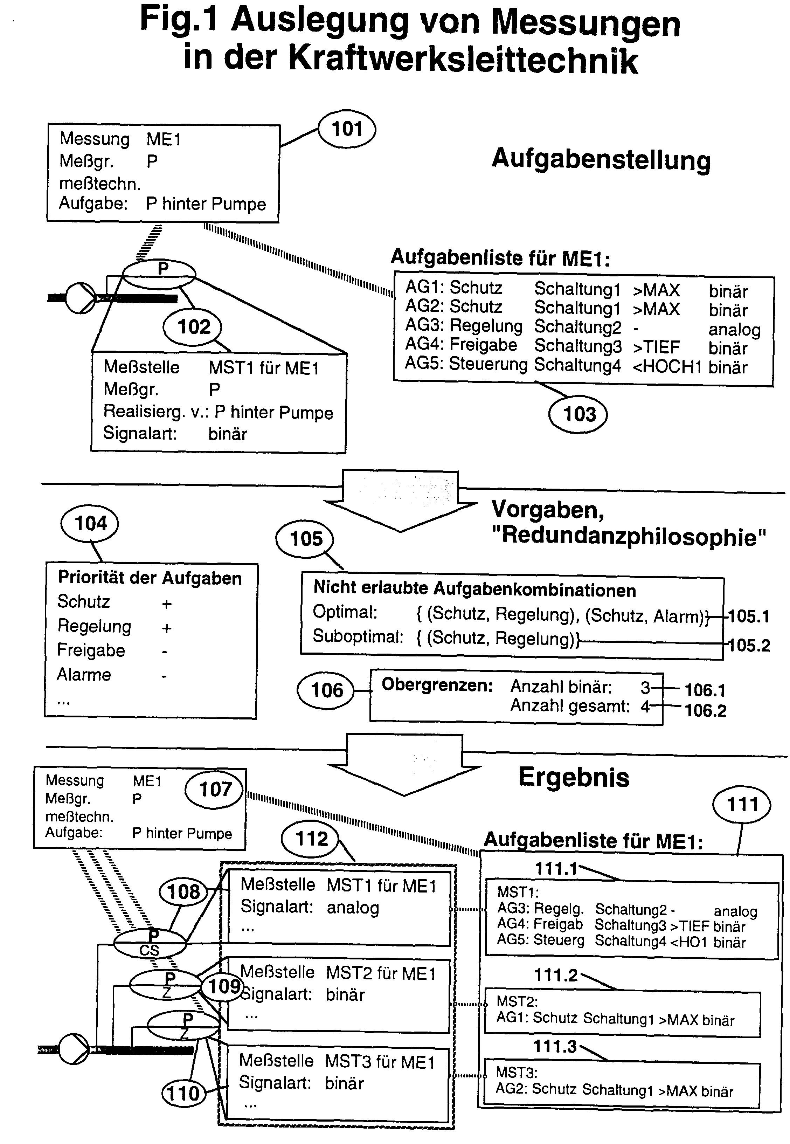

Fig.1 zeigt die verfahrensgemäße Vorgehensweise in einer Gesamtübersicht. Im oberen Drittel der Figur 1 sind die Bestandteile der Aufgabenstellung zu erkennen, wie sie als Eingabe für das Verfahren dienen. Es sind dies:
- die Beschreibung (Daten) einer Messung 101,
- die dazu gehörige Meßstelle 102, dargestellt als Graphik ("Meßei") und als Datenblatt, und
- eine Liste mit Aufgaben 103, die die Messung zu bedienen hat.

Im mittleren Drittel der Fig. 1 ist dargestellt, mit welchen Angaben die Redundanz-auslegung beeinflußt werden kann. Der Leittechnikplaner spricht bei diesen Angaben auch von der Vorgabe einer "Redundanzphilosophie". Es sind dies die Prioritäten für Aufgabenklassen 104. Für Aufgaben mit hoher Priorität ("+") dürfen neue Meßstellen 102 angelegt werden, wenn im Laufe des Verfahrens keine 'passende' Meßstelle dafür gefunden wurde; für Aufgaben mit niedriger Priorität dürfen keine neuen Meßstellen angelegt werden. In einer Liste "nicht erlaubte Aufgabenkombinationen" 105 sind Beispiele für unerwünschte Aufgabenkombinationen aufgeführt, und zwar für optimale Auslegung 105.1 und für suboptimale Auslegung 105.2. Letztere ist in der Regel eine Untermenge von 105.1. Bei der Zuordnung von Aufgaben zu Meßstellen darf keine Meßstelle eine unerwünschte Aufgabenkombination auf sich vereinigen. Als letzte Vorgabe sind Obergrenzen 106 für die Anzahl der binären Meßstellen pro Messung 106.1 und für die Anzahl aller Meßstellen pro Messung 106.2 vorgesehen. Wenn im Verlauf des Verfahrens neue Meßstellen 102 erzeugt werden, dürfen diese Obergrenzen 106 nicht überschritten werden.

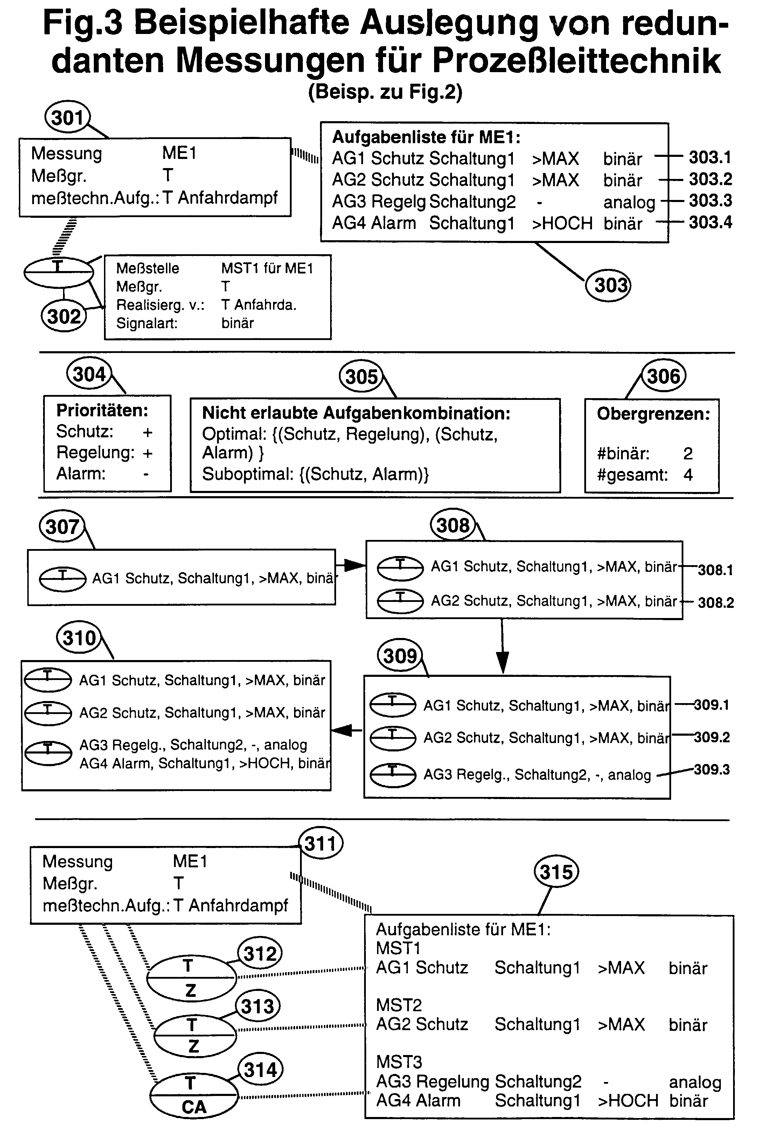

Das untere Drittel der Fig. 1 zeigt das Ergebnis des verfahrensgemäßen Ablaufes. Die Messung 107 ist nun redundant ausgelegt und hat mehrere Meßstellen 108, 109, 110. Ihre Aufgabenliste 111 ist in so viele Teile 111.1 bis 111.3 geteilt worden, wie Meßstellen 108, 109, 110 vorhanden sind. Den Meßstellen 108 bis 110 sind die jeweils zugehörigen Teillisten 111.1 bis 111.3 zugeordnet. Die erste Meßstelle 108 hat die Signalart analog, weil ihr laut Aufgabenliste 111.1 ein analoges Signal zugeordnet ist (Aufgabe AG3). Zur Unterscheidung von binären Meßstellen ist sie grau hinterlegt dargestellt. Sie hat außerdem Aufgaben AG4 und AG5, weil sie als analoge Meßstelle mehr als ein Signal bedienen kann (nämlich laut Aufgabenliste 111.1 nun ein analoges Signal, ein Signal ">TIEF" und ein Signal "<HO1"). Die Meßstellen enthalten Kennbuchstaben, z.B. CS, Z, die über die zugeordneten Aufgaben Auskunft geben; die Kennbuchstaben sind weiter unten erläutert (siehe Ende der Beschreibung zu Fig. 3). Ergebnis des Verfahrens ist eine Liste 112 der minimal nötigen Meßstellen je Messung (z.B. Meßstellen MST1 bis MST3 für die Messung ME1).

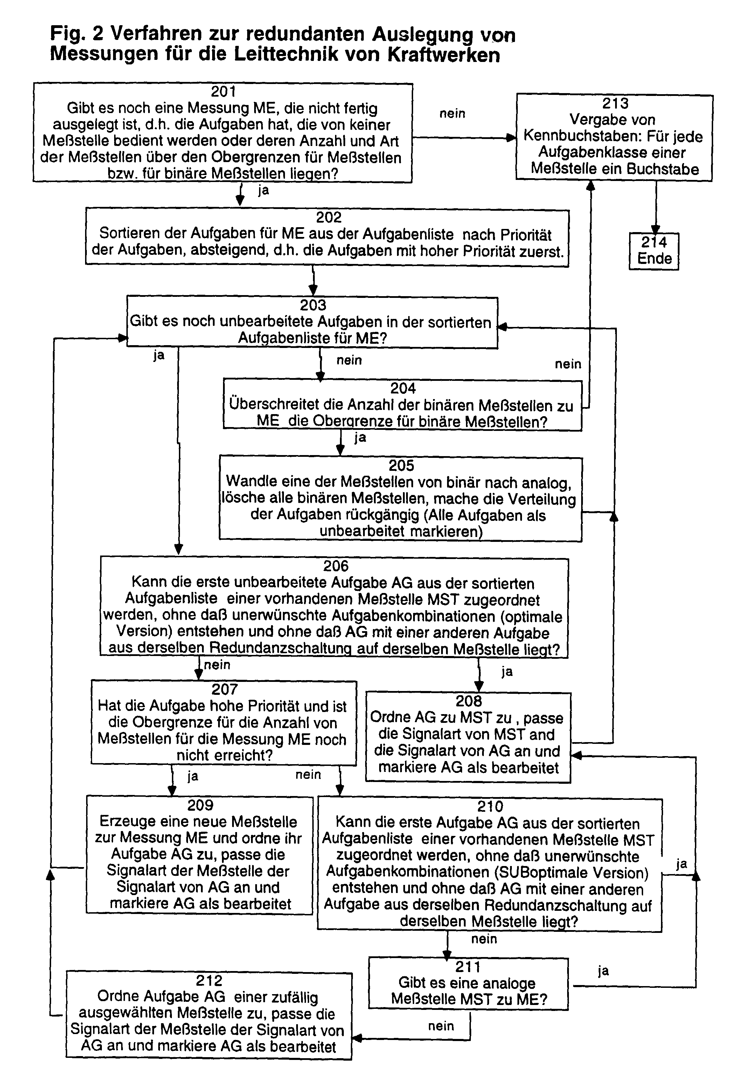

In Fig. 2 ist in Schritten 201 bis 214 der verfahrensgemäße Ablauf bei der Auslegung der Meßstellen dargestellt. Das Verfahren kann iterativ auf alle vorliegenden Messungen angewendet werden und terminiert, wenn alle Messungen ausgelegt sind (Schritt 201). Gibt es eine Messung ME, die noch nicht ausgelegt ist, werden die Aufgaben, die zu ME gehören, nach ihrer Priorität sortiert (202), und zwar nach absteigender Priorität der Aufgabe. Die Priorität für alle Aufgabenklassen ist (als Eingabe) vorgegeben (Fig.1, 104). Gibt es noch unbearbeitete Aufgaben in der sortierten Aufgabenliste (203), so wird versucht, die erste unbearbeitet Aufgabe AG aus der Liste einer geeigneten Meßstelle zuzuordnen (206). Eine vorhandene Meßstelle MST von Messung ME ist geeignet, wenn die neue Aufgabe AG zusammen mit den Aufgaben, die bereits auf MST liegen keine unerwünschte Aufgabenkombination bei optimaler Auslegung bildet (Fig.1, 105.1) und wenn keine andere Aufgabe zu MST zugeordnet ist, die aus derselben (Redundanz-)Schaltung wie AG kommt. Ist MST geeignet, so wird AG als bearbeitet markiert und MST zugeordnet (208). Hat AG die Signalart analog oder ist MST binär und hat zusammen mit AG Aufgaben mit zwei oder mehr verschiedenen Signalen (z.B. > MAX und >HOCH), so wird die Signalart von MST analog. Das Verfahren geht weiter bei Schritt 203 und sucht weitere, unbearbeitete Aufgaben der Messung ME.

Wird in Schritt 206 keine optimal geeignete Meßstelle für AG gefunden, so wird zunächst geprüft (207), ob die Aufgabe eine hohe Priorität hat (Fig.1, 104 ) und ob die Obergrenze für die Gesamtzahl der Meßstellen für ME noch nicht erreicht ist (Fig. 1, 106.2). Ist das der Fall (209) wird eine neue Meßstelle erzeugt, die Signalart der Meßstelle wird der von AG angepaßt, AG wird als bearbeitet markiert und der neuen Meßstelle zugeordnet. Anschließend kehrt das Verfahren zu Schritt 203 zurück und sucht weitere unbearbeitete Aufgaben.

Verzweigt Schritt 207 in den NEIN-Zweig, d.h. entweder hat die Anzahl der Meßstellen für ME bereits die Obergrenze (106.2) erreicht, oder die Aufgabe AG hat niedrige Priorität, wird eine suboptimale Auslegung (Fig.1, 105.2) versucht (210). Eine vorhandene Meßstelle MST von Messung ME ist für AG geeignet, wenn die neue Aufgabe AG zusammen mit den Aufgaben, die bereits auf MST liegen keine unerwünschte Aufgabenkombination bei suboptimaler Auslegung bildet und wenn keine andere Aufgabe zu MST zugeordnet ist, die aus derselben (Redundanz-) Schaltung wie AG kommt. Ist MST geeignet, so wird AG als bearbeitet markiert, MST zugeordnet (208), die Signalart von MST wird an AG angepaßt und das Verfahren kehrt zu Schritt 203 zur weiteren Bearbeitung von Aufgaben zurück. Wird in Schritt 210 auch unter suboptimalen Bedingungen keine geeignete Meßstelle gefunden, so wird die Aufgabe einer analogen Meßstelle zugewiesen (211), wenn auch keine analoge Meßstelle für ME existiert, dann einer zufällig ausgewählten Meßstelle (212). Deren Signalart wird angepaßt und das Verfahren setzt erneut bei Schritt 203 auf.

Sind alle Aufgaben bearbeitet, so verzweigt Schritt 203 in den NEIN-Zweig. Dort wird die Obergrenze für binäre Meßstellen (Fig.1, 106.1) überprüft (204). Wenn möglich, sollen möglichst viele Aufgaben binären Meßstellen zugeordnet werden, da binäre Meßstellen preisgünstiger sind als analoge Meßstellen. Auf der anderen Seite ist es ab einer gewissen Obergrenze der Anzahl N günstiger, statt einer Anzahl N binären eine analoge Meßstelle einzusetzen. Überschreitet die Anzahl der binären Meßstellen für ME die Obergrenze (Fig. 1, 106.1), so geht das Verfahren in eine neue Runde (205). Dazu wird eine der binären Meßstellen in eine analoge Meßstelle umgewandelt. Alle anderen binären Meßstellen werden gelöscht, nachdem die Zuordnung zwischen Meßstellen und Aufgaben aufgehoben wurde, und alle Aufgaben der Messung ME als unbearbeitet markiert wurden. Danach beginnt das Verfahren erneut mit Schritt 203. Die Integration endet, wenn so viele analoge Meßstellen angelegt wurden, wie laut Obergrenze (Fig.1, 106.2) für die Meßstellen pro Messung erlaubt sind. In diesem Fall ist die "maximale" Auslegung erreicht. Sind alle Aufgaben bearbeitet und hält sich die Zahl der binären Meßstellen unterhalb der Obergrenze (Schritt 204), dann werden abschließend Kennbuchstaben an die Meßstellen vergeben (Schritt 213), und zwar pro Aufgabenklasse ein Buchstabe. Damit endet das Verfahren (Schritt 214).

In Fig.3 ist ein einfaches Beispiel für die Vorgehensweise nach Fig.2 dargestellt. Im oberen Teil ist die Aufgabenstellung zu sehen, gegeben durch die Beschreibung einer Messung 301, eine Meßstelle 302, dargestellt als Datenblatt und als Graphik, d.h. "Meßei" und die Aufgabenliste 303 der Messung. Darunter sind die Vorgaben für die Auslegung aufgeführt: Die Prioritäten 304 für die Aufgabenklassen, aus denen zu erkennen ist, daß die Aufgaben Schutz und Regelung hohe Priorität, Alarmaufgaben niedrige Priorität haben. Die nächsten Vorgaben sind die nicht erlaubten Aufgabenkombinationen 305. In diesem Beispiel darf im optimalen Fall keine Meßstelle Regelung und Schutz oder Alarm und Schutz auf sich vereinigen. Im suboptimalen Fall sind die Bedingungen etwas gelockert, d.h. nur noch die Kombination von Schutz und Alarm ist nicht erlaubt. Die dritte Vorgabe zeigt die Obergrenzen 306 für die Anzahl der binären Meßstellen und die Anzahl aller Meßstellen pro Messung.

Die Messung 301 wurde im ersten Schritt des Verfahrens (201, Fig.2) als unfertig ausgelegte Messung erkannt, da keine ihrer Aufgaben eine zugeordnete Meßstelle besitzt. Die Aufgabenliste 303 wurde im Schritt 202, Fig.2 nach Priorit‰ten 304 sortiert. Nun sind Schutz (303.1, 303.2) und Regelung (303.3), die eine hohe Priorität haben, vorne in der Liste, die Alarmaufgabe (303.4) am Ende der Liste. Für die erste Aufgabe AG1 (303.1) wird jetzt eine geeignete Meßstelle gesucht (206, Fig.2). Die Meßstelle MST1 (302) wird als geeignet identifiziert, weil ihr noch keine anderen Aufgaben zugeordnet sind. Aufgabe AG1 wird dieser Meßstelle zugeordnet (208, Fig.2) und die Signalart von MST1 wird der von AG1 anpaßt, d.h. Meßstelle MST1 ist binär. Das Ergebnis ist mit Bezugszeichen 307 gekennzeichnet. Anschließend wird für die nächste, unbearbeitete Aufgabe AG2 (303.2) eine Meßstelle gesucht. MST1 (302) ist ungeeignet, da AG1 und AG2 in derselben (Redundanz-)Schaltung liegen und deswegen - wenn möglich - verschiedenen Meßstellen zugeordnet werden müssen. Im folgenden Schritt (207, Fig.2) wird festgestellt, daß die Aufgabenklasse von Aufgabe AG2, nämlich Schutz, eine hohe Priorität hat (vgl. 304), und daß die Obergrenze für die Anzahl der Messungen von ME1 (301) gleich eins ist und damit unter der Vorgabe (306) liegt. Also kann in Schritt 209, Fig.2, eine neue Meßstelle (308.2) erzeugt werden, der die Aufgabe AG2 zugeordnet wird. Die neue Meßstelle ist wieder binär, da AG2 binär ist. Das Ergebnis ist in Bezugszeichen 308 zu sehen: Die Messung MEI hat nun zwei Meßstellen (308.1, 308.2), denen je eine Aufgabe (AG1, AG2) zugeordnet ist und die binär sind. Die nächste unbearbeitete Aufgabe (vgl. 203, Fig.2) ist AG3 (303.3). Für sie wird in Schritt 206 keine optimale Meßstelle gefunden, da bei jeder Zuordnung zu einer existierenden Meßstelle die unerlaubte Aufgabenkombination (Schutz, Regelung) (305) entstehen würde. Die Aufgabenklasse von AG3, Regelung, hat aber eine hohe Priorit‰t (vgl. 304) und die Obergrenze für die Anzahl der Meßstellen ist nicht erreicht. Deswegen verzweigt Schritt 207, Fig.2 wiederum nach Schritt 209 und es wird eine neue Meßstelle (309.3) erzeugt. Die neue Meßstelle ist analog, da AG3 analog ist. In der Fig. 3 ist sie (309.3) zur Unterscheidung von den binären Meßstellen grau dargestellt. Die letzte unbearbeitete Aufgabe ist AG4 (303.4), eine Alarmaufgabe. Die ersten beiden Meßstellen (309.1, 309.2) sind für AG4 ungeeignet, da durch die Zuordnung die unerlaubte Aufgabenkombination (Schutz, Alarm) entstehen würde. Die dritte Meßstelle (309.3) ist jedoch geeignet, da die Aufgaben nicht kollidieren und da AG4 und AG3 aus unterschiedlichen Schaltungen stammen. AG4 wird dieser Meßstelle zugeordnet. Die Signalart der Meßstelle muß nicht verändert werden, da analoge Meßstellen beliebige analoge und binäre Signale liefern können. Das Ergebnis ist mit Bezugszeichen 310 gekennzeichnet. Nun sind alle Aufgaben zugeordnet, Schritt 203, Fig.2 verzweigt nach Schritt 204, Fig.2. Dort wird festgestellt, daß die Anzahl der binären Meßstellen für ME1, nämlich 2, die Obergrenze (306) nicht überschreitet.

Der Ablauf kommt nun zum letzten Schritt, nämlich der Vergabe von Kennzeichnungen, die auf die zugeordneten Aufgaben schließen lassen. Das Kennzeichen besteht aus einem Buchstaben pro Aufgaben klasse, die einer Meßstelle zugeordnet ist. Die in diesem Beispiel gezeigten Kennbuchstaben entsprechen den Angaben der Norm DIN 19227, Teil 3, Sept. 1978. Die erste Messung (312) und die zweite Messung (313) erhalten für die Aufgabenklasse Schutz ein Z. Die dritte Messung (314) erhält für die Aufgabenklassen Regelung ein C und Alarm ein A. Die Ergebnisse der Auslegung sind durch Bezugszeichen 311 bis 315 dargestellt: Die Messung ME1 (311) hat nun zwei binäre Meßstellen 312, 313 und eine analoge Meßstelle 314. Die Aufgabenliste von ME1 (315) ist zerteilt und den Meßstellen zugeordnet. Die Meßstellen 312, 313, 314 tragen Kennbuchstaben für die ihnen zugeordneten Aufgaben.

## Patentansprüche

1. Verfahren zur automatisierten und optimalen Redundanz-Auslegung von Messungen für die Leittechnik in Kraftwerken, unter Verwendung einer Datenverarbeitungseinrichtung und eines Rechnerprogramms zur Durchführung des Verfahrens, wobei
a) das Programm
- eine Beschreibung der Prioritäten (104) für die Redundanzanforderung von Aufgabenklassen (z.B.: alle Aufgaben der Klasse "Schutz" haben hohe Priorität, Aufgaben der Klasse "Steuerung" niedrige),
- eine Beschreibung von nicht erwünschten Aufgabenkombinationen (105) für eine Meßstelle (z.B. {(Schutz, Regelung); (Schutz, Alarm)} ), und
- eine Obergrenze (106.1) für die Anzahl der redundanten binären Meßstellen, die es für eine Messung geben darf, enthält,
b) vor dem Programmstart eingegeben werden:
- die Beschreibung einer Messung (101), die mindestens einen Namen (z.B. ME1) enthält,
- die Beschreibung einer der Messung (101) zugeordneten Meßstelle (102,108), die mindestens aus dem Namen (z.B. MST1 für ME1) und der Signalart (z.B. binär) der Meßstelle besteht ,und
- die Beschreibung der Aufgaben (103), die die Messung übernehmen soll, die mindestens für jede Aufgabe deren Aufgabenklasse, Herkunft, den geforderten Grenzwert und die Signalart beschreibt, und
c) nach dem Start in nachstehenden Schritten eine Liste (112) der minimal nötigen Meßstellen für eine Messung - unter Beachtung der gemäß Merkmal a) gespeicherten Bedingungen - erstellt wird:
- die Aufgabenliste der Messung wird absteigend nach Priorität sortiert
- die Aufgaben werden der Reihenfolge nach bearbeitet;
- für jede Aufgabe wird eine geeignete Meßstelle gesucht, so daß keine unerwünschten Aufgabenkombinationen auf einer Meßstelle entstehen und so, daß keine zwei Aufgaben mit derselben Herkunft der selben Meßstelle zugeordnet werden;
- wird keine geeignete Meßstelle gefunden, so wird eine neue Meßstelle für diese Aufgabe erzeugt, sofern die Aufgabe hohe Priorität hat; hat die Aufgabe niedrige Priorität, so wird die Aufgabe irgendeiner Meßstelle der Messung zugeordnet;
- die Meßstelle paßt ihre Signalart der Aufgabe an;
- werden bei der Auslegung mehr binäre Meßstellen erzeugt, als gemäß der Obergrenze (106.1) erlaubt, so wird die Zuordnung rückgängig gemacht, eine der binären Meßstellen in eine analoge umgewandelt, alle binären Meßstellen wieder entfernt und das Verfahren beginnt von vorne;
- das Verfahren ist beendet, wenn die Aufgabenliste (111) zerteilt und jede der Teillisten (111.1-111.3) einer Meßstelle aus der Liste der Meßstellen (112) für die Messung zugeordnet ist.

2. Verfahren nach Anspruch 1, dadurch gekennzeichnet, daß die Meßstellen (108) mit Kennbuchstaben versehen werden, aus denen ersichtlich ist, welche Aufgaben die Meßstelle übernimmt (z.B. 'SC' für eine Meßstelle, die für Steuerung und Regelung (Control) verwendet wird).

3. Verfahren nach Anspruch 1 oder 2, dadurch gekennzeichnet, daß eine Obergrenze (106.2) für die Anzahl aller (binären und analogen) Meßstellen pro Messung vorgegeben ist, die bei der Auslegung nicht überschritten wird, indem auch für Aufgaben hoher Priorität keine neuen Meßstellen angelegt werden , wenn die Anzahl aller Meßstellen einer Messung die Obergrenze erreicht haben.

4. Verfahren nach einem der vorstehenden Ansprüche, dadurch gekennzeichnet, daß eine optimale Liste (105.1) und eine suboptimale Liste (105.2) unerwünschter Aufgabenkombinationen im Programm gespeichert sind, und daß zunächst eine Meßstelle gesucht wird unter Vermeidung der unerwünschten Aufgabenkombinationen aus der optimalen Liste, bei Mißerfolg aus der suboptimalen Liste, und bei erneutem Mißerfolg eine beliebige Meßstelle für eine Aufgabe verwendet wird.

## Claims

1. A method for the automated and optimal redundancy design of measurement for process control systems in power plants by using a data processing device and a computer program to perform the method, with
a) the program comprising
- a description of the priorities (104) for the redundancy requirement of classes of tasks (e.g. all classes of the task "protection" have high priority, tasks of class "control" have a low priority);
- a description of undesirable combinations of tasks (105) for a measuring point (such as [(protection, closed-loop control); (protection, alarm)]) and
- an upper limit (106.1) for the number of the redundant binary measuring points which may exist for a measurement;
b) the following being entered prior to the start of the program:
- the description of a measurement (101) which comprises at least one name (e.g. ME1);
- the description of a measurement (101) which is assigned to the measuring point and consists of at least the name (e.g. MST1 for ME1) and the type of signal (e.g. binary) of the measuring point and
- the description of the tasks (103) which the measurement is to assume, which describes at least for each task its class of task, origin, the required limit value and the type of signal and
c) a list (112) of the minimally required measuring points for a measurement being generated after the start in the following steps under adherence to the conditions as stored pursuant to feature a):
- the list of tasks of the measurement is sorted descending according to priority;
- the tasks are processed according to sequence;
- a suitable measuring point is sought for every task, so that no undesirable combinations of tasks arise in a measuring point and in such a way that no two tasks with the same origin are assigned to the same measuring point;
- if no suitable measuring point is found, a new measuring point for this task is generated if the task has a high priority; if the task has a low priority, the task is assigned to any measuring point of the measurement;
- the measuring point adjusts its type of signal to the task;
- if more binary measuring points are produced during the design than are permitted according to the upper limit (106.1), the assignment is reversed, one of the binary measuring points is converted into an analogue one, all binary measuring points are removed again and the process starts from the beginning;
- the process is completed once the list of tasks (111) has been broken down and each of the partial lists (111.1 to 111.3) has been assigned to a measuring point from the list of the measuring points (112) for the measurement.

2. A method as claimed in claim 1, characterised in that the measuring points (108) are provided with identification letters which show the tasks which the measuring point will assume (e.g. "SC" for a measuring point which is used for open-loop and closed-loop control).

3. A method as claimed in claim 1 or 2, characterised in that an upper limit (106.2) has been predetermined for the number of all (binary and analogue) measuring points, which upper limit is not exceeded in that even for tasks of high priority no new measuring points are created when the number of all measuring points of a measurement have reached the upper limit.

4. A method as claimed in one of the preceding claims, characterised in that an optimal list (105.1) and a suboptimal list (105.2) of undesirable combinations of tasks are stored in the program, and that at first a measuring point is sought by avoiding the undesirable combinations of tasks from the optimal list, and in the case of failure from the suboptimal list and in the case of further failure, any random measuring point is used for a task.

## Revendications

1. Procédé pour la conception automatisée et optimale des redondances de mesure pour les systèmes de contrôle-commande de centrales électriques, utilisant un dispositif de traitement de données et un programme d'ordinateur pour l'exécution du procédé, caractérisé en ce que :
a) le programme contient
- une description des priorités (104) pour les exigences de redondance des classes de tâche (par exemple, toutes les tâches de la classe « Protection » ont une priorité élevée, les tâches de la classe « Commande » une priorité réduite),
- une description des combinaisons de tâches à éviter (105) pour un point de mesure (par exemple {(Protection, Régulation) ; (Protection, Alarme)}, et
- une limite supérieure (106.1) du nombre de points de mesure binaires redondants autorisés pour une mesure ;
b) on saisit, avant le démarrage du programme :
- la description d'une mesure (101) qui contient au moins un nom (p. ex. ME1),
- la description d'un point de mesure (102, 108) associé à la mesure (101), qui se compose au moins du nom (p. ex. MST1 pour ME1) et du type de signal (p. ex. binaire) du point de mesure, et
- la description des tâches (103) que la mesure doit assurer, qui décrit au moins, pour chaque tâche, la classe, l'origine, la valeur limite exigée et le type de signal de celle-ci ;
c) une liste (112) du minimum de points de mesures nécessaires pour une mesure est établie après le démarrage au cours d'étapes ultérieures, en tenant compte des conditions enregistrées selon la caractéristique a):
- la liste de tâches de mesure est triée par ordre décroissant de priorité,
- les tâches sont traitées successivement,
- un point de mesure adéquat est recherché pour chaque tâche de telle sorte qu'il ne se crée par de combinaisons de tâches indésirables en un point de mesure et que deux tâches de même origine ne puissent pas être affectées au même point de mesure,
- un nouveau point de mesure est créé pour cette tâche, si le système ne trouve pas de point de mesure adéquat, à condition que la tâche ait une priorité élevée, la tâche étant affectée à un point de mesure quelconque de la mesure si elle a une priorité inférieure,
- le type de signal du point de mesure est adapté à la tâche,
- l'affectation est annulée si la conception crée plus de points de mesure que ne l'autorise la limite supérieure (106.1), l'un des points de mesure binaires est transformé en point de mesure analogique, tous les points de mesure sont supprimés et le procédé reprend depuis le début,
- le procédé est terminé lorsque la liste de tâches (111) est divisée et chacune des parties de liste (111.1-111.3) est affectée à un point de mesure dans la liste des points de mesure (112) assurant la mesure.

2. Procédé selon la revendication 1, caractérisé en ce que les points de mesure (108) sont pourvus de lettres d'identification qui indiquent quelles tâches le point de mesure exécute (p. ex. « CR » pour un point de mesure utilisé pour la Commande et la Régulation).

3. Procédé selon la revendication 1 ou 2, caractérisé en ce qu'une limite supérieure (106.2) est fixée au nombre total de points de mesure (analogiques et binaires) et ne doit pas être dépassée pendant la conception, aucun nouveau point de mesure ne devant être créé, même pour les tâches de priorité élevée, si le nombre de points de mesure d'une mesure a atteint la limite supérieure.

4. Procédé selon l'une quelconque des revendications précédentes, caractérisé en ce qu'une liste optimale (105.1) et une liste suboptimale (105.2) des combinaisons de tâches indésirables sont enregistrées dans le programme, et en ce qu'un point de mesure est tout d'abord recherché en évitant les combinaisons de tâches indésirables de la liste optimale et, si la recherche n'aboutit pas, dans la liste suboptimale, et un point de mesure quelconque est utilisé pour la tâche si cette recherche n'aboutit pas non plus.
